# EUROPEAN PATENT SPECIFICATION

(11) **EP 1 375 982 B1**
(45) Date of publication and mention of the grant of the patent: **12.04.2006**
(21) Application number: 02380135.0
(22) Date of filing: 28.06.2002
(51) Int. Cl.: F16J 15/32

(54) **Improved packing for revolving axles under extreme working conditions**
Wellendichtung für extreme Betriebsbedingungen
Joint d'étanchéité pour axe rotatif travaillant dans des conditions extrêmes

(43) Date of publication of application: 02.01.2004
(73) Proprietor: HISPAINOX S.A., 46930 Quart de Poblet (Valencia) (ES)
(72) Inventor: Cervera Palomares, Vicente, 46930 Quart de Poblet (Valencia) (ES)
(74) Representative: Bohnenberger, Johannes

(56) References cited:
- EP-A- 0 270 938

## Description

### PURPOSE

The purpose to which the invention protected by this Patent refers is an "Improved packing for revolving axles under extreme working conditions", such as high speed, high temperature, etc.

The packing is "lining placed on the organs of some machines to prevent fluid leaks".

The invention is conceived as a watertight means preferably applied to revolving axles operating under such conditions that it is difficult to maintain said watertightness as regards the fluid in which they operate when used in machines such as industrial or domestic mixers or crushers, shakers, etc.

### HISTORY

Numerous packing or reinforcements of different material are known, based on the generic shape of washers or elastic rings.

These watertight means generally lack effectiveness due to the fact they should simultaneously respond to two functional conditions of an antagonistic nature: on the one hand, they have to be adjusted to the revolving axle at high speed to prevent the fluids from passing between the former and the packing whilst, on the other, they must allow said turning without causing friction that could give rise to heating and wear.

EP 0 270 938 discusses an oil seal which is to be used with an aggressive fluid. An oil seal is discussed made from PTFE, for use as a seal for surrounding a revolving axle and stopping oil from passing. The seal is possessed of a plurality of elements for surrounding the axle. No discussion, however, is made of providing the seal element made with three separate elements which are held in tight engagement with each other.

### DESCRIPTION OF THE INVENTION

The aim of the invention constituting the purpose of this Patent is to develop a suitable packing to satisfactorily resolve simultaneous compliance with the two basic antagonistic requirements described above, and has been conceived and designed bearing in mind this priority purpose.

In this regard, a complex washer has been designed, the structure of which includes three different parts, with different materials, shapes and functions. These parts are interlinked and have the following technical characteristics:
A basic washer, made of silicone, that has external perimetral projections on its lateral surface to be tightly inserted and made unmovable in a permanent organ of the machine. It also has a wide internal perimetral groove, centered in its height, that enters up to approximately the half of its thickness.
Two flat annular discs made of graphite Teflon, inserted into the internal perimetral groove of the basic washer, from which approximately a little more than half of its width project. The projecting parts are folded in opposite directions, that of the upper disc upwards and that of the lower disc downwards.

These projecting parts make direct and tight contact with the revolving axle and, at the same time, cause slight friction that is lubricated by the graphite of the annular discs.
A small stiff washer also inserted into the internal perimetral groove of the basic washer, with the same width as the depth of said groove. It is placed between the two rings for their separation and retention.

The height of the internal perimetral groove of the basic washer is such that it permits the two annular discs made of graphite Teflon and their separating washer to be tightly housed inside.

The above-described packing constitutes a watertight means to prevent leakage of the fluid resulting from the mixing or crushing action of the machine, the revolving axle of which is protected both upwards and downwards. In other words, it is efficient to prevent leakage of the fluid generated internally.

For this reason, in order to complete the efficiency of the packing it is necessary to protect the machine from external fluid penetration that could harm its state of maintenance.

This complementary protection is obtained by another packing independent from the one already described, with the same structure and composition, which has the singularity that the projecting parts of the two annular discs are folded in the same direction, upwards, to facilitate the function of preventing liquids from penetrating from the outside, and descend along the axle. The basic washer of this complementary packing has a beveled section pointing inwards in the upper area of the internal perimetral groove to support the projecting part of the upper annular ring in its position.

The described packing constitutes an preferred performance example, but not a limitation in the number and arrangements of its components as, if technically so required, the number of washers or the number of annular discs of each one or the arrangement of the projecting parts placed on the revolving axle can be increased, without the protection scope of this Patent being exceeded.

### BRIEF DESCRIPTION OF THE DRAWINGS

In order to complement the description of the invention and to facilitate understanding of the formal, structural and functional characteristics of its purpose, attached are drawings in which different aspects of a preferred performance of the "Improved packing for revolving axles under extreme working conditions", constituting the purpose of this Patent, are schematically represented. In said drawings:
Figure 1 represents a diametral section of the basic packing showing the relative arrangements of the projecting parts of the annular discs; whilst Figure 1 is a diametral section of the complementary packing.
Figure 3 represents the longitudinal section of some revolving axles, shown as an application example of the claimed packing, which appears in the two versions, basic and complementary, in their respective positions on one side and the other of the double track ball bearings that facilitate revolving of the mobile organs.

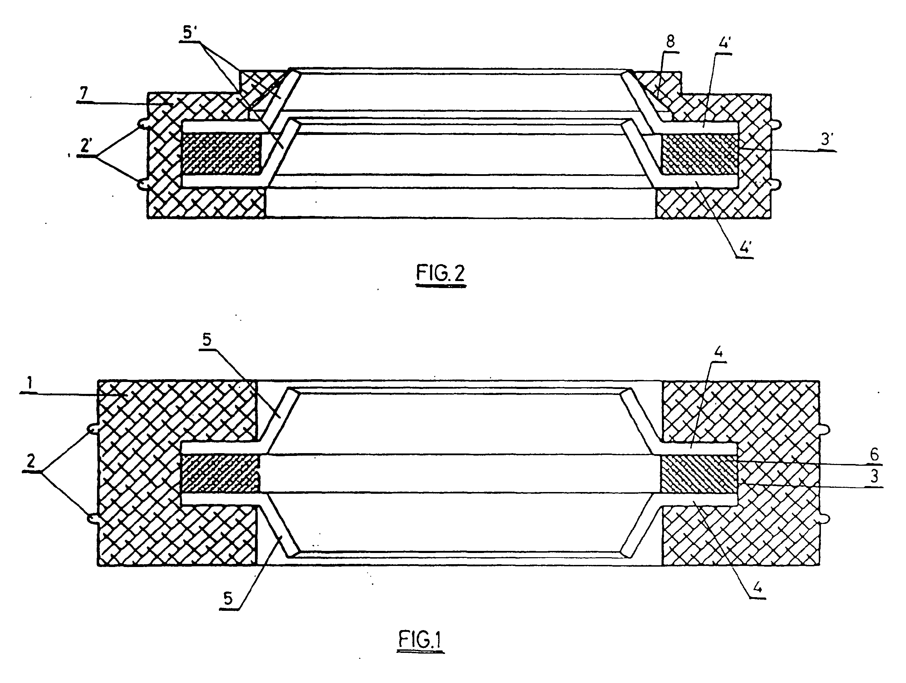

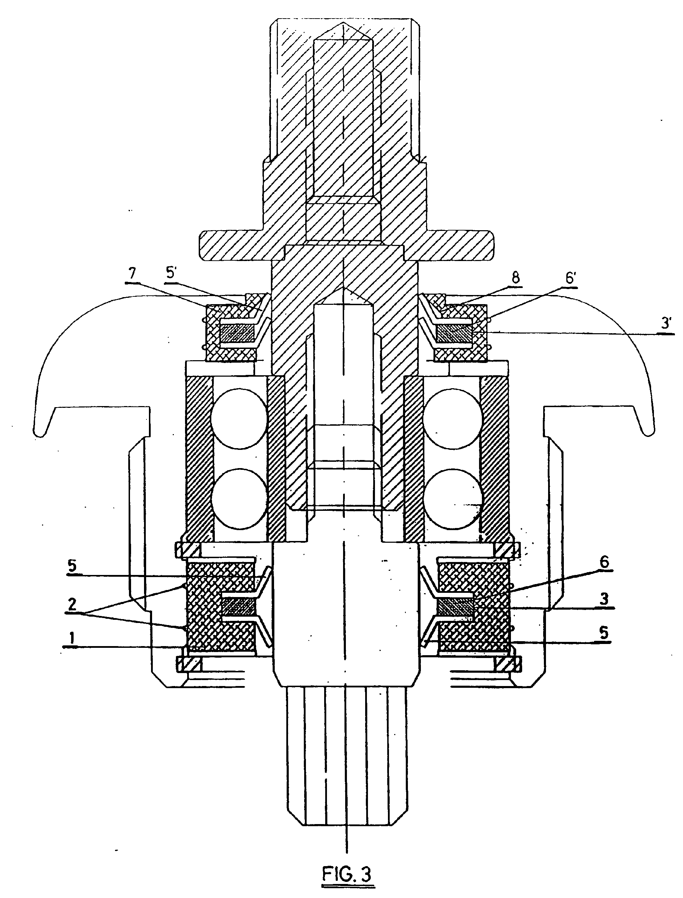

### DESCRIPTION OF A PREFERRED PERFORMANCE

To clearly show the nature and scope of the advantageous application of the "Improved packing for revolving axles under extreme working conditions", purpose of the claimed invention, the following is a description of its structure and arrangement making reference to the drawings that, on representing a preferred performance of said objective for information purposes must be considered in its widest and non-limiting sense as regards the application and content of the claimed invention.

Its structure includes three different parts, with different although related materials, forms and functions, the technical characteristics of which are as follows:
A basic washer (1), preferably made of silicone, that has external perimetral projections (2) on the lateral surface to be tightly inserted and made unmovable in a permanent organ of the machine. It also has a wide internal perimetral groove (3), centered in its height, that enters up to approximately the half of its thickness.
Two flat annular discs (4) preferably made of graphite Teflon, inserted into the internal perimetral groove (3) of the basic washer (1), from which approximately a little more than half of its width project. The projecting parts (5) are folded in opposite directions, that of the upper disc upwards and that of the lower disc downwards, with both making direct and tight contact with the revolving axle.
A small stiff washer (6) also inserted into the internal perimetral groove (3) of the basic washer (1), with the same width as the depth of said groove (3). It is placed between the two annular rings (4) for their separation and retention.

The height of the internal perimetral groove (3) of the basic washer (1) is such that it permits the two annular discs (4) and their separating washer (6) to be tightly housed inside.

To protect the revolving organs of the machine from external fluid penetration, the above claimed packing is complemented with another packing (7) of the same structure and composition, which has the singularity that the projecting parts (5') of the two annular discs (4'), in tight contact with the revolving organs, are folded in the same upward direction; whilst the basic washer (7) has a beveled section (8) pointing inwards in the upper area of the internal perimetral groove (3') to support the projecting part of the upper annular ring in its position.

## Claims

1. Packing for revolving axles under extreme working conditions, **characterized by**
- a basic washer (1; 7) made of silicone, having external projections (2; 2') on the lateral surface to be inserted in a permanent organ of the machine, said washer (1; 7) having an internal groove (3; 3'), centred in the height of the washer (1; 7), said groove (3; 3') having a depth corresponding approximately to the half of the thickness of the washer(1; 7);
- two flat annular discs (4; 4') preferably made of graphite Teflon, said discs (4; 4') being inserted into said groove (3; 3') of the basic washer (1; 7), with more than the half of their width projecting out of the groove (3; 3');
- and a stiff washer (6) inserted into the internal groove (3; 3') of the basic washer (1; 7), said stiff washer (6) having a width equal to the depth of the groove (3; 3') and being placed between the two annular discs (4; 4') for their separation and retention.

2. Packing according to claim 1, **characterized in that** the height of the internal perimetral groove (3) of the basic washer (1) is such that it permits the two annular discs (4) and their separating washer (6) to be tightly housed inside.

3. Packing according to claims 1 and 2, **characterized by** the projecting parts (5) of the two annular discs (4) being folded in opposite direction; the upper disc being folded upwards and the lower disc downwards.

4. Packing according to claims 1 and 2, **characterized by** the projecting parts (5') of the two annular discs (4') being folded in the same upward direction and the basic washer (7) having a bevelled section (8) pointing inwards in the upper area of the internal groove (3') to support the projecting part (5') of the upper annular disc (4') in its position.

## Patentansprüche

1. Packung für umlaufende Achsen unter extremen Arbeitsbedingungen, **gekennzeichnet durch**
- ein einfacher Dichtungsring (1; 7) aus Silikon, der äußere Vorsprünge (2; 2') an der seitlichen Oberfläche zum Einsetzen in ein permanentes Element der Maschine hat, wobei der Dichtungsring (1; 7) eine innere Nut (3; 3') hat, die über die Höhe des Dichtungsrings (1; 7) zentriert ist, wobei die Nut (3; 3') eine Tiefe hat, die ungefähr der halben Dicke des Dichtungsrings (1; 7) entspricht;
- zwei flache Ringscheiben (4; 4'), die bevorzugt aus Graphit-Teflon bestehen, wobei die Scheiben (4; 4') in die Nut (3; 3') des Dichtungsrings (1; 7) eingesetzt sind, wobei mehr als ihre halbe Breite aus der Nut (3; 3') hervorsteht;
- und ein steifer Dichtungsring (6), der in die innere Nut (3; 3') des Dichtungsrings (1; 7) eingesetzt ist, wobei der steife Dichtungsring (6) eine Breite hat, die gleich der Tiefe der Nut (3; 3') ist und zwischen den zwei Ringscheiben (4; 4') zu deren Trennung und Sicherung angeordnet ist.

2. Packung nach Anspruch 1,
**dadurch gekennzeichnet, dass**
die Höhe der inneren Umfangsnut (3) des Dichtungsrings (1) derart ist, dass sie zulässt, dass die zwei Ringscheiben (4) und ihr trennender Dichtungsring (6) fest sitzend darin untergebracht sind.

3. Packung nach den Ansprüchen 1 und 2,
**dadurch gekennzeichnet, dass**
die vorspringenden Teile (5) der zwei Ringscheiben (4) in entgegengesetzte Richtungen umgebogen sind; wobei die obere Scheibe nach oben und die untere Scheibe nach unten umgebogen ist.

4. Packung nach den Ansprüchen 1 und 2,
**dadurch gekennzeichnet, dass**
die vorspringenden Teile (5') der zwei Ringscheiben (4') in der gleichen Aufwärtsrichtung umgebogen sind und der Dichtungsring (7) einen abgeschrägten Abschnitt (8) hat, der in dem oberen Bereich der inneren Nut (3') nach innen weist, um den vorspringenden Teil (5') der oberen Ringscheibe (4') in seiner Position abzustützen.

## Revendications

1. Garniture pour axes tournants dans des conditions de travail extrêmes, **caractérisée par**
- une rondelle de base (1 ; 7) constituée de silicone, ayant des saillies extérieures (2 ; 2') sur la surface latérale devant être insérée dans un organe permanent de la machine, ladite rondelle (1 ; 7) ayant une rainure interne (3 ; 3') centrée dans la hauteur de la rondelle (1 ; 7), ladite rainure (3 ; 3') ayant une profondeur correspondant approximativement à la moitié de l'épaisseur de la rondelle (1 ; 7) ;
- deux disques annulaires plats (4 ; 4') constitués de préférence de Téflon-graphite, lesdits disques (4 ; 4') étant insérés dans ladite rainure (3 ; 3') de la rondelle de base (1 ; 7), avec plus de la moitié de leur largeur formant saillie hors de la rainure (3 ; 3') ;
- et une rondelle rigide (6) insérée dans la rainure interne (3 ; 3') de la rondelle de base (1 ; 7), ladite rondelle rigide (6) ayant une largeur égale à la profondeur de la rainure (3 ; 3') et étant placée entre les deux disques annulaires (4 ; 4') pour les séparer et les retenir.

2. Garniture selon la revendication 1, **caractérisée en ce que** la hauteur de la rainure périmétrique interne (3) de la rondelle de base (1) est telle qu'elle permet aux disques annulaires (4) et à leur rondelle de séparation (6) d'y être logés étroitement à l'intérieur.

3. Garniture selon les revendications 1 et 2, **caractérisée en ce que** les parties en saillie (5) des deux disques annulaires (4) sont pliées dans des directions opposées, le disque supérieur étant plié vers le haut et le disque inférieur vers le bas.

4. Garniture selon les revendications 1 et 2, **caractérisée en ce que** les parties en saillie (5') des deux disques annulaires (4') sont pliées dans la même direction vers le haut et la rondelle de base (7) a une section biseautée (8) dirigée vers l'intérieur dans la zone supérieure de la rainure interne (3') pour soutenir la partie en saillie (5') du disque annulaire supérieur (4') dans sa position.
